# EUROPEAN PATENT APPLICATION

(11) **EP 2 731 234 A1**
(43) Date of publication of application: **14.05.2014**
(21) Application number: 12807926.6
(22) Date of filing: 11.06.2012
(51) Int. Cl.: H02K 1/28, H02K 1/27

(54) **ROTOR OF ELECTRIC MOTOR**

(30) Priority: 05.07.2011 JP 2011148972
(71) Applicant: Nissan Motor Co., Ltd, Yokohama-shi, Kanagawa 221-0023 (JP)
(72) Inventor: TAGUCHI, Naoto, Kanagawa 243-0123 (JP); MORITA, Tsukasa, Kanagawa 243-0123 (JP)
(74) Representative: Hoefer & Partner
(86) International application number: PCT/JP2012/064913
(87) International publication number: WO 2013/005531

(57) **Abstract**

A rotor for an electric motor includes: an engagement portion formed in a groove shape in an outer periphery of a rotor shaft; and an annular ring member that is attached to the engagement portion such that an elastic force acting in a direction for clamping the rotor shaft is generated in order to restrict movement of the rotor core in a single direction along an axis of the rotor core. An outer diameter of the rotor shaft in the engagement portion increases steadily away from the rotor core.

## Description

### TECHNICAL FIELD

The present invention relates to a structure for fixing a rotor core to a rotor shaft of an electric motor.

### BACKGROUND ART

A rotor for an electric motor includes a rotor shaft and a rotor core supported fixedly on an outer peripheral portion of the rotor shaft. In a conventional structure for restricting axial direction movement of a member supported on an outer peripheral portion of a cylindrical member, as described in JP62-237155A, for example, a groove is provided in the outer peripheral portion of the cylindrical member, and a ring member known as a snap ring is attached to the groove.

### SUMMARY OF INVENTION

Incidentally, a rotor core is typically constructed by laminating electromagnetic steel sheets, and therefore large variation tends to occur in an axial direction dimension thereof. To ensure that axial direction movement of this type of rotor core is restricted reliably, the snap ring preferably contacts an end portion of the rotor core so as to be immobile.

However, variation also exists in an inner diameter dimension of the rotor core, an outer dimension of the rotor shaft, and press-fitting conditions, and therefore, with the fixing method described in JP62-237155A, variation is likely to occur in a force for fixedly supporting the rotor core. Depending on the degree of variation, it may be impossible to fix the rotor core securely.

It is therefore an object of the present invention to provide a rotor for an electric motor having a structure that is capable of fixedly supporting a rotor core on a rotor shaft securely.

To achieve the object described above, the present invention includes: an engagement portion formed in a groove shape in an outer periphery of a rotor shaft; and an annular ring member that is attached to the engagement portion such that an elastic force acting in a direction for clamping the rotor shaft is generated in order to restrict movement of the rotor core in a single direction along an axis of the rotor core. An outer diameter of the rotor shaft in the engagement portion increases steadily away from the rotor core.

Details of the present invention as well as other features and advantages are set forth in the following description of the specification and illustrated in the attached drawings.

### BRIEF DESCRIPTION OF DRAWINGS

FIG. 1 is a view showing a configuration of a rotor to which an embodiment of the present invention is applied.
FIG. 2 is an enlarged view of the vicinity of a tip end side end sheetshown in FIG. 1.
FIG. 3A is an overall view of a retainer.
FIG. 3B is an enlarged view of a cutaway portion of the retainer.
FIG. 4 is an enlarged view of the vicinity of the tip end side end plate when an axial direction length of a rotor core is at a minimum.
FIG. 5 is an enlarged view of the vicinity of the tip end side end plate when the axial direction length of the rotor core is at a maximum.

### DESCRIPTION OF EMBODIMENTS

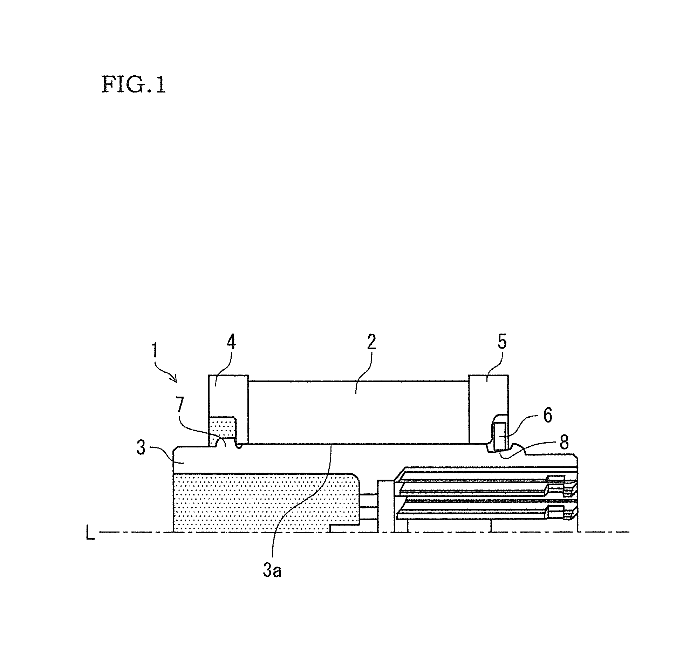

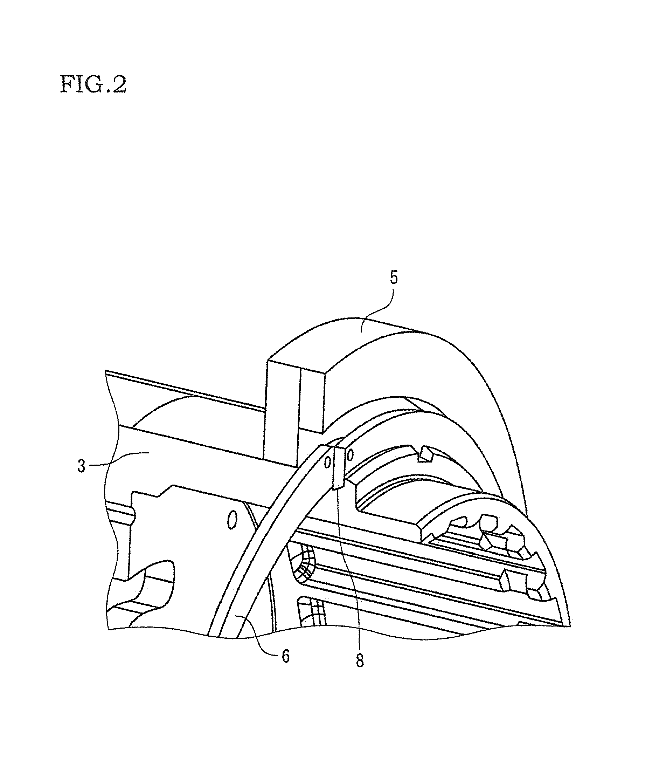

FIG. 1 is a view showing a configuration of a rotor for an electric motor, to which a fixing structure according to an embodiment of the present invention is applied. In the following description, a leftward direction on a paper surface of FIG. 1 corresponds to an axial direction base end side, and a rightward direction on the paper surface corresponds to an axial direction tip end side. FIG. 2 is an enlarged view showing the vicinity of an end plate on a rear end of the rotor.

A rotor 1 includes a rotor shaft 3 that rotates about an axis L, and a rotor core 2 disposed on an outer periphery of the rotor shaft 3. A base end side end plate 4 and a tip end side end plate 5 are disposed respectively on the axial direction base end side and the axial direction tip end side of the rotor core 2. A ring retainer 6 for restricting movement of the tip end side end plate 5 toward the axial direction tip end side is disposed on the axial direction tip end side of the tip end side end plate 5.

The rotor core 2 includes annular electromagnetic steel sheets laminated in the direction of the axis L, and permanent magnets disposed in a plurality of support holes provided in a laminated body of the electromagnetic steel sheets, for example.

The rotor shaft 3 includes a flange 7 that projects toward a radial direction outer side so as to contact the base end side end plate 4 when the rotor 1 is assembled, and an engagement portion 8 that is recessed toward a radial direction inner side such that the ring retainer 6 engages therewith.

The flange 7 restricts movement of the base end side end plate 4 toward the axial direction base end side.

The engagement portion 8 is formed by reducing an outer diameter of the rotor shaft 3, and a bottom portion thereof is inclined so as to become gradually shallower toward the axial direction tip end side, or in other words such that an outer shape of the rotor shaft 3 becomes gradually larger toward the axial direction tip end side.

It should be noted that spline processing is implemented on an inner peripheral surface of the rotor shaft 3 over a fixed range of the axial direction tip end side to enable engagement to another shaft or the like, not shown in the figures.

A method of assembling the rotor 1 including the constituent members described above is as follows. First, the base end side end plate 4 is pressed in from the axial direction tip end side of the rotor shaft 3 until the base end side end plate 4 contacts the flange 7. Next, the rotor core 2 is likewise pressed in from the axial direction tip end side until the rotor core 2 contacts the base end side end plate 4. The tip end side end plate 5 is then likewise pressed in from the axial direction tip end side until the tip end side end plate 5 contacts the rotor core 2. In this condition, the ring retainer 6 is engaged with the engagement portion 8. As a result, the rotor core 2 is supported fixedly on the rotor shaft 3 while sandwiched between the base end side end plate 4 and the tip end side end plate 5. Movement thereof toward the axial direction tip end side is restricted by the ring retainer 6, and movement thereof toward the axial direction base end side is restricted by the flange 7.

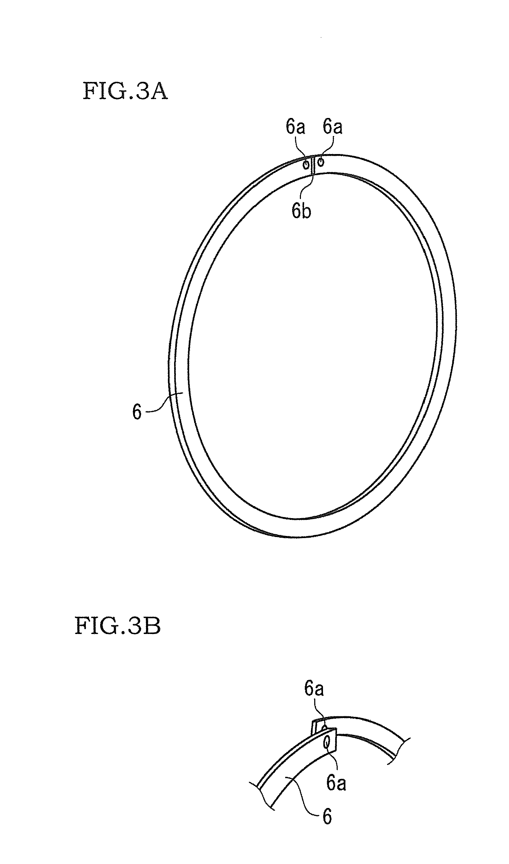

FIG. 3A is an overall view of the ring retainer 6.

The ring retainer 6 is formed from spring steel plate, for example, in an annular shape having a cutaway portion 6b in a single location on a periphery thereof. An inner diameter of the ring retainer 6 is equal to or smaller than an outer diameter of the engagement portion 8. The ring retainer 6 includes attachment holes 6a on respective end parts sandwiching the cutaway portion 6b. By inserting a tool into the attachment holes 6a so as to increase the diameter of the ring retainer 6, the ring retainer 6 can be attached to the rotor shaft 3 easily. Removal can be performed equally as easily as attachment, and therefore dismantling for maintenance and recycling purposes is also easy.

As described above, the bottom portion of the engagement portion 8 is inclined, and therefore an elastic force component oriented toward the axial direction base end side is generated in the ring retainer 6. A force required to move the ring retainer 6 toward the axial direction tip end side is larger than that of a case in which the bottom portion of the engagement portion 8 is not inclined by an amount corresponding to the elastic force. In other words, by providing the incline, the ring retainer 6 can restrict movement of the rotor core 2 and so on toward the axial direction tip end side more reliably.

An inner peripheral surface of the ring retainer 6 is inclined so as to align with the bottom portion 8a of the engagement portion 8 when the ring retainer 6 is attached to the rotor shaft 3. As a result, a larger contact area is obtained between the ring retainer 6 and the rotor shaft 3 than when the inner peripheral surface of the ring retainer 6 is not inclined, and therefore movement of the ring retainer 6 toward the axial direction tip end side is restricted more reliably.

To increase a frictional force of a contact surface, a length of the ring retainer 6 in the direction of the axis L (to be referred to hereafter as the "thickness of the ring retainer 6") is preferably increased within a range in which the ring retainer 6 can be fitted into the engagement portion 8 as long as a length of the rotor core 2 in the direction of the axis L (to be referred to hereafter as the "axial direction length") remains within a tolerance range. In so doing, the contact area between the ring retainer 6 and the engagement portion 8 is increased further.

Furthermore, as shown in FIG. 3B, the ring retainer 6 may be formed such that respective circumferential direction ends thereof overlap when the ring retainer 6 is not attached to the rotor shaft 3. In so doing, elastic force acts on the radial direction inner side of the rotor shaft 3 when the ring retainer 6 is attached to the rotor shaft 3 such that the ring retainer 6 is fixed more firmly to the rotor shaft 3.

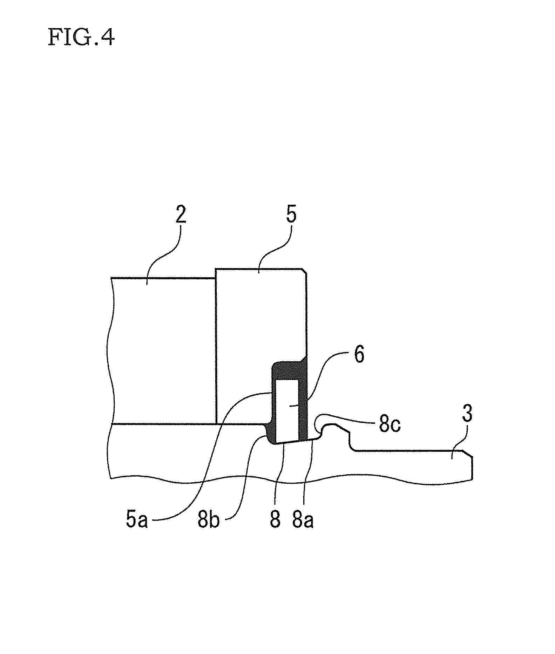

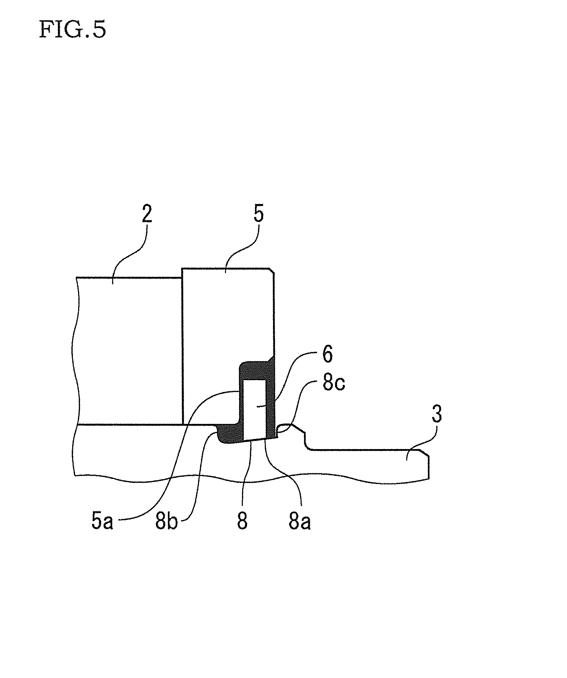

Next, a position of the engagement portion 8 and a width thereof in the direction of the axis L will be described with reference to FIGS. 4 and 5.

FIGS. 4 and 5 are both enlarged views of the vicinity of the tip end side end plate 5 shown in FIG. 1. FIGS. 4 and 5 show cases in which the axial direction length of the rotor core 2 is at a minimum and at a maximum within the tolerance range, respectively.

The rotor core 2 is constituted by a laminated body of electromagnetic steel sheets, and since variation exists in the thickness of the respective electromagnetic steel sheets, variation occurs in the axial direction length of the rotor core 2, as shown in FIGS. 4 and 5.

Therefore, the position of the engagement portion 8 and the axial direction width of the engagement portion 8 (to be referred to hereafter simply as the "width of the engagement portion") is set such that as long as the axial direction length of the rotor core 2 is within the tolerance range, the ring retainer 6 fits into the engagement portion 8.

More specifically, when the axial direction length of the rotor core 2 is at a minimum within the tolerance range, as shown in FIG. 4, an axial direction base end side wall portion 8b is either set further toward the axial direction base end side than a contact surface 5a of the tip end side end plate 5 that contacts the ring retainer 6, or set to be flush with the contact surface 5a.

Further, when the axial direction length of the rotor core 2 is at a maximum within the tolerance range, as shown in FIG. 5, an axial direction tip end side wall portion 8c is set further toward the axial direction tip end side than an axial direction tip end side surface of the ring retainer 6. Hence, as long as the axial direction length of the rotor core 2 is within the tolerance range, the ring retainer 6 can be fitted into the engagement portion 8 reliably.

According to this embodiment, as described above, the following effects are obtained.

The rotor 1 includes the engagement portion 8 formed in a groove shape in the outer periphery of the rotor shaft 3, and the retainer ring 6 that is attached to the engagement portion 8 to restrict movement of the rotor core 2 in a single direction along the axis of the rotor core 2. The outer diameter of the rotor shaft 3 in the engagement portion 8 increases steadily away from the rotor core in the direction of the axis L. The axial direction width of the engagement portion 8 is set such that the ring retainer 6 can be engaged with the engagement portion 8 regardless of whether the axial direction dimension of the rotor core 2 is set at a minimum or a maximum within the tolerance range. Hence, variation in the dimensions of the rotor core 2, the base end side end plate 4, and the tip end side end plate 5 can be absorbed, and as a result, the rotor 1 can be fixedly supported reliably.

The ring retainer 6 includes the cutaway portion 6b formed in a part of the periphery thereof such that when the ring retainer 6 is engaged with the engagement portion 8, elastic force is generated in a direction for clamping the rotor shaft 3. Moreover, the inner peripheral surface of the ring retainer 6 is inclined in alignment with the incline on the outer peripheral surface of the engagement portion 8. As a result, the rotor core 2 can be supported fixedly on the rotor shaft 3 by a fixed preliminary pressure regardless of whether the axial direction width of the rotor core 2 and so on is at a maximum or a minimum. Further, the rotor 1 can be dismantled by widening the ring retainer 6, and therefore maintenance and recycling are easy.

Before the ring retainer 6 is attached to the engagement portion 8, the respective end portions of the ring retainer 6 sandwiching the cutaway portion 6b overlap each other such that when the ring retainer 6 is engaged with the engagement portion 8, elastic force is generated reliably.

An embodiment of the present invention was described above, but the above embodiment merely illustrates a part of the example of applications of the present invention, and the technical scope of the present invention is not limited to the specific configurations of the embodiment. For example, in the above description, the base end side end plate 4, the rotor core 2, and the tip end side end plate 5 are formed as separate bodies, but may be formed integrally.

The present application claims priority based on JP2011-148972A, with a filing date of July 5, 2011 in Japan, the entire contents of which are incorporated herein by reference.

## Claims

1. A rotor for an electric motor, having a rotor shaft and a rotor core that is supported fixedly on an outer periphery of the rotor shaft, comprising:
an engagement portion formed in a groove shape in the outer periphery of the rotor shaft; and
an annular ring member that is attached to the engagement portion to restrict movement of the rotor core in a single direction along an axis of the rotor core,
wherein an outer diameter of the rotor shaft in the engagement portion increases steadily along the axis away from the rotor core.

2. The rotor for an electric motor according to claim 1, wherein the ring member includes a cutaway portion in a part of a periphery thereof such that when the ring member is engaged with the engagement portion, elastic force is generated in a direction for clamping the rotor shaft, and
an inner peripheral surface of the ring member is inclined so as to align with an incline on an outer peripheral surface of the engagement portion when the ring member is engaged with the engagement portion.

3. The rotor for an electric motor according to claim 2, wherein, before the ring member is attached to the engagement portion, respective end portions of the ring member sandwiching the cutaway portion overlap each other.

4. The rotor for an electric motor according to any one of Claims 1 to 3, wherein an axial direction width of the engagement portion is set such that as long as an axial direction dimension of the rotor core is within a tolerance range, the ring member can be engaged with the engagement portion.
